# EUROPEAN PATENT APPLICATION

(11) **EP 2 192 021 A2**
(43) Date of publication of application: **02.06.2010**
(21) Application number: 09177005.7
(22) Date of filing: 25.11.2009
(51) Int. Cl.: B62B 3/06, B62B 3/10

(54) **Transporter**

(30) Priority: 26.11.2008 DK 200801667
(71) Applicant: Holdingselskabet MKR Finans ApS, 7100 Vejle (DK)
(72) Inventor: Raun, Knud, 7100, Vejle (DK)
(74) Representative: Gregersen, Niels Henrik

(57) **Abstract**

The present invention concerns a dolly (1) with chassis (4), motor for propulsion, steering handle (12) and with actuation means (6), where the dolly (1) is adapted for transporting units (2) which via a coupling system (9) are attached to the dolly (1), and where the dolly has at least one drive wheel (3). The new feature of the dolly is that it includes a movable lifting frame (7), where the lifting frame (7) is provided with coupling means (9) for coupling between the dolly (1) and a transporting unit (2), where the transporting unit is constituted by a rubbish bin (2). It is thus a dolly (1) which is particularly adapted for transporting full and empty rubbish bins (2). By a dolly according to the invention, a solution is achieved which allows a caretaker or similar to move many rubbish bins in a rapid and safe way, as the work will not be particularly physically strenuous.

## Description

### Field of the Invention

The present invention concerns a dolly with chassis, motor for propulsion, steering handle and with actuation means, where the dolly is adapted for transporting units which via a coupling system are attached to the dolly, and where the dolly has at least one drive wheel.

### Background of the Invention

It is commonly known that when rubbish bins are to be emptied, it is required that they are moved to the edge of the pavement or to other agreed positions. This implies increased capacity for the refuse collector since no time has to be used for collecting full rubbish bins and returning them after emptying. Irrespectively of whether it is a caretaker or a refuse collector who is handling the rubbish bins, it can be a hard work since a rubbish bin is often heavy. By the current types of rubbish bins, there are wheels at one edge and handles at the top. By tilting the rubbish bin via the handles, it may be rolled like a traditional dolly which is much easier than by the paper bags of former times. The rubbish bins are typically adapted with an edge at the opening at which a hook member on the emptying device on the refuse vehicle may grip and fix the rubbish bin while it is turned upside down and emptied at the back of the refuse vehicle. It is thus only necessary for the refuse collector to roll one or more rubbish bins to a position behind the vehicle and ensure that the former are attached to the emptying device. By such a technique, quite a bit has been done to relieve the physical effort of the refuse collector while caretakers are still subjected to a great physical load.

This is i.a. due to the fact that many rubbish bins are often to be moved to the agreed position on one and the same day. Rubbish bins are often located in basements in blocks of flats or are hidden in other localities where they can stand without being a nuisance with regard to smell and where it is possible to keep rats, cats and dogs and the like away from rummaging in the refuse. Since the rubbish bin, as mentioned, are typically provided with wheels, it may be possible to pull or push them to the emptying place, but often this transport is to take place up along basement stairs which may be a heavy a tedious work. However, on basement stairs there are often narrow ramps along both sides on which bicycles and trams can be drawn. These ramps will, of course, facilitate the transport of rubbish bins up and down the stairs, but there is the difference that the wheel gauge of a rubbish bin does not fit the two ramps at respective sides of the stairs. Therefore, it is often associated with some difficulty to move the full rubbish bins to the emptying position.

### Object of the Invention

It is the purpose of the invention to indicate a cart or dolly which can be used for transporting full as well as empty rubbish bins and/or other objects, without substantial physical effort, and where the task can be performed in a safe way.

### Description of the Invention

As mentioned in the introduction, the invention concerns a dolly with chassis, motor for propulsion, steering handle and with actuation means. Furthermore, a coupling system is provided by which transport units can be attached to the dolly which has at least one drive wheel. The new feature of the dolly is that it includes a movable lifting frame, where the lifting frame is provided with coupling means for coupling between the dolly and a transporting unit, where the transporting unit is constituted by a rubbish bin.

It is thus a dolly which is particularly adapted for transporting full and empty rubbish bins. By a dolly according to the invention, a solution is achieved which allows a caretaker or similar to move many rubbish bins in a rapid and safe way, as the work will not be particularly physically strenuous. It is a dolly which advantageously may be equipped with an electric battery-powered motor of the type known from numerous other vehicles. E.g. can be mentioned mover dollies for hospital beds or for linen carts. With such a dolly, a caretaker may readily bring rubbish bins back and forth.

The said coupling means which are mounted on the lifting frame of the dolly, may e.g. correspond to the means arranged behind a refuse vehicle, and which are used for coupling between the rubbish bin and the tilting device of the refuse vehicle for emptying rubbish bins. In principle, it is a very simple type of coupling which may be constituted by one or more pawls that are brought to engage corresponding indentations in the shape of a traditional hole-pin assembly. These pawls or indentations may of course be adapted for lateral displacement, and by using this form of coupling means there is achieved the obvious advantage that all standardised rubbish bin readily can be moved with a dolly according to the invention.

In a preferred variant of a dolly according to the invention, this may be provided with a tilting lifting frame, where the tilting frame is pivotably connected to the chassis about a horizontal axis on the dolly, thereby allowing a reciprocating movement of the lifting frame, preferably by a mechanical actuator, for example an electric linear actuator or other suitable type.

In principle, it is a lifting frame which may be lowered by a forwardly directed tilt, whereby the coupling means on the lifting frame are lowered as well and can engage corresponding coupling means on the rubbish bin. By subsequently elevating the lifting frame again, the rubbish bin is drawn with it and is lifted gradually from the base, and in the fully elevated position the rubbish bin will rest against the slightly rearwardly tilted lifting frame. Now is only left to activate the motor or the dolly and to drive the rubbish bin to the desired place.

On a dolly according to the invention, the coupling means on the lifting frame are arranged on a movable upper part of the lifting frame, where the movable upper part of the lifting frame is manually movable. By moving the upper part of the lifting frame, this may be adapted to various heights of rubbish bins, but the movable upper part of the lifting frame may also be used for an independent lifting of the rubbish bin which is independent of the reciprocating movement of the lifting frame.

In another variant of the invention, the movable upper part of the lifting frame may be automatically mechanically movable, e.g. by an actuator which therefore together with the tiltable lifting frame can be used for lifting the rubbish bin.

In a preferred variant of a dolly according to the invention, this is provided with supporting wheels arranged on arms that project forwardly from the chassis with mutual spacing such that a rubbish bin can be placed between the arms. The support wheels may advantageously be of the swivelling type that provide maximum manoeuvrability. The arms extending forward and along the sides of the rubbish bin ensure that the weight of the dolly will not stress the user, but will only rest on the base. However, there may just be made a dolly according to the invention which does not have the said support wheels, but which only has one or more forwardly projecting arms. Both the arms with and those without support wheels serve the purpose of ensuring that the dolly does not tilt forward during coupling action with a heavy rubbish bin. The dolly may very well be adapted such that the when the rubbish bin is coupled on and the lifting frame is in position for transport, the centre of gravity will be located such that the vehicle is in balance. Such a solution may advantageously be used in many places but will give some inexpediencies when rolling up or down a sloping base.

In a particularly preferred embodiment of a dolly according to the invention, the said arms are adjustable in longitudinal direction. This may be effected by a simple solution, such as a hand screw which is loosened and allow extension of a telescoping tube, but may of course also be an automatic extension by means of an actuator or similar. The length of the arms may hereby be adapted to various tasks, such as different rubbish bin sizes.

The extended and forwardly projecting arms may also be arranged for mounting a platform, where the platform is readily mounted and dismounted. By such a platform, the dolly may fulfil further needs, e.g. by maintenance of outdoor areas or similar.

As mentioned previously, a dolly according to the invention may be without support wheels, implying that it is not so easy to drive up and down a sloping base. By using the support wheels, this property is achieved. However, it may be difficult to operate a dolly while driving on a sloping base. By providing the dolly with a pivotable steering handle which is movably connected to the chassis of the dolly, and where between steering handle and the dolly there is arranged a spring device, e.g. a gas spring, these problems are overcome. When the dolly rolls up along a sloping base, e.g. basement stairs with slides at the sides, the steering handle is more or less pivoted by itself to the optimal position for the user. Without the pivoting steering handle, the user would have to stretch himself inconveniently after the steering handle as dolly and user are not at the same level.

During normal operation of a dolly according to the invention, this may be braked by means of the electric motor or motors driving the dolly, but if this brake should fail for one or the other reason, the dolly may advantageously be provided with a manual mechanical brake, where the brake is connected with the pivoting steering handle, e.g. in the form of one or two plates that are pressed against the wheels by pivoting the steering handle. It is thus possible to brake a dolly by moving the steering handle down as far as it will go. In this position, the steering handle may then be secured by locking means suited therefor, e.g. as it is known from a common lockable brake.

A variant of a dolly according to the invention may be provided with means for adjusting the wheel gauge of the dolly on the chassis of the dolly. This may be effected by displacing one or both wheels or possible support wheels to the side in order thereby to adapt the wheel gauge to the slides provided on certain basement stairs. By this solution, the laying of loose slides on stairs is avoided.. These loose slides are cumbersome to arrange, but they are also associated with a greater risk of walking on. The caretaker may possibly get used to it, but other users of the stairs may easily be surprised by such slides whereby an increased hazard of fall accidents rapidly arises.

By a dolly according to the invention it is thus possible to move rubbish bins in an easy and expedient way without increasing the risk of physical injuries. The dolly may be adapted for various tasks and may facilitate the daily work of a caretaker in general.

### Description of the Drawing

The invention is described in the following with reference to the drawing, wherein:
- Fig. 1: shows a dolly without a rubbish bin;
- Fig. 2: shows a dolly with a forwardly tilted lifting frame;
- Fig. 3: shows a dolly with a partially lifted lifting frame; and
- Fig. 4: shows a dolly with a lifted rubbish bin.

### Detailed Description of Embodiments of the Invention

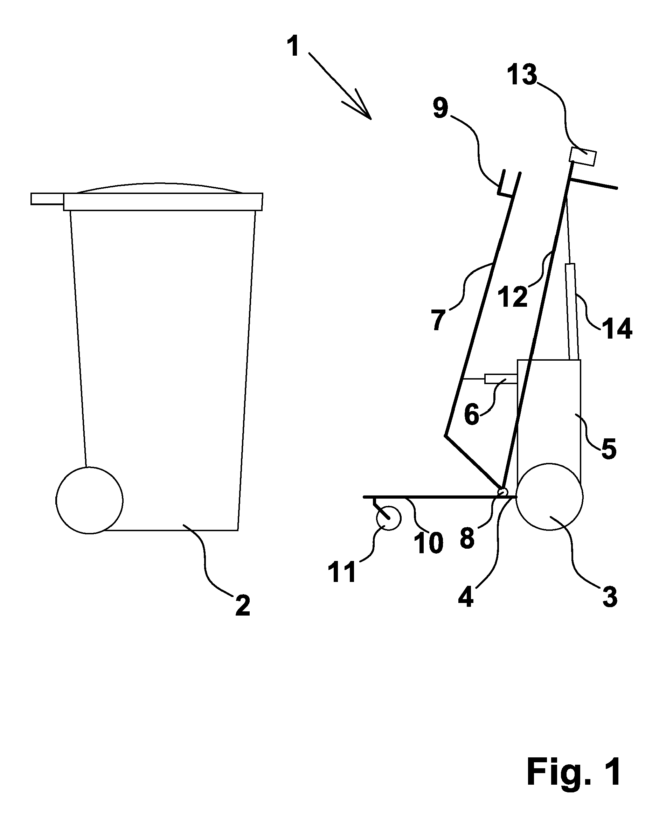

In Fig. 1 is seen a dolly 1 in front of a traditional rubbish bin 2. The dolly 1 is provided with driving wheel set 3 which is mounted on a chassis 4. The wheel set 3 may be with a mechanical as well as with an electric differential and driven by a not shown electric motor or other suitable type of motor disposed between or above the wheels.

Above the wheel set 3 is i.a. mounted battery packs 5 and an actuator 6 which is connected between the chassis 4 and a lifting frame 7. The lifting frame 7 is fixed to the chassis 4 by a transverse horizontal axis 8 and which at its top is provided with coupling means 9 intended for engagement in corresponding cutouts or holes in the rubbish bin 2.

At its top, the lifting frame 7 will be adapted such that the upper part can be set at different levels. This may be by a simple telescoping solution where the setting occurs stepwise or steplessly by means of manual actuating means, or it may be effected by one or more not shown actuators.

On the chassis 4, there is further mounted two forwardly directed arms 10 with support wheels 11 of the swivelling type at the ends. Finally, a steering handle 12 is mounted on the chassis 4. In the shown embodiment, the steering handle 12 is also mounted by a transverse horizontal axis 8 about which the steering handle 12 can be pivoted in order to achieve optimal working position. On the steering handle 12 there is furthermore mounted a control box 13 from which speed, driving direction and lifting and lowering of the lifting frame 7 are controlled. The steering handle 12 may also be adjusted in height by means of not shown manual stepping or stepless means.

Between the chassis 4 and the steering handle 12, a spring element 14 is further mounted, here in the shape of a gas spring, which has the purpose of keeping the steering handle 12 at a certain position, but at the same time to allow moving the steering handle 12 to the previously mentioned optimal working position.

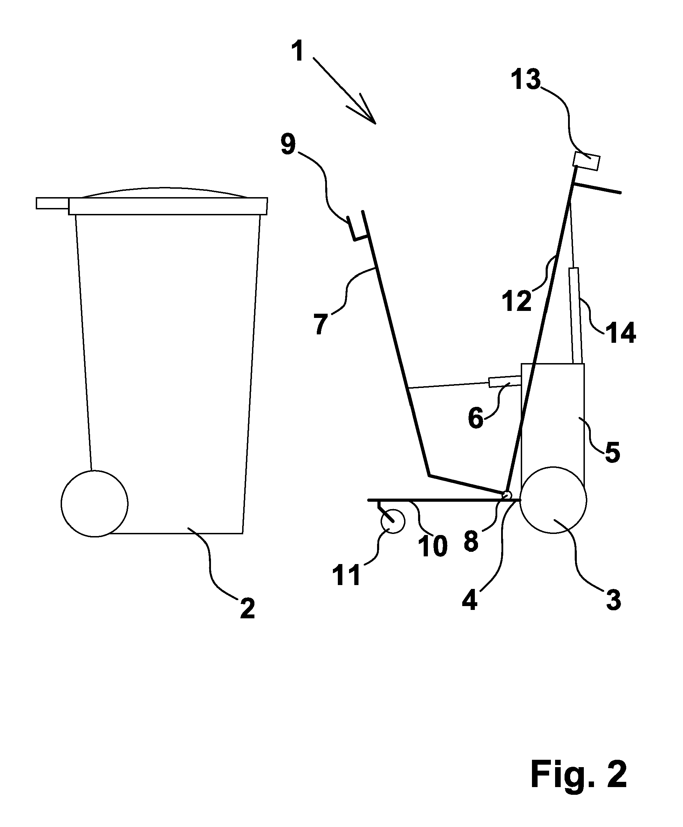

In Fig. 2 appears the dolly 1 with lowered lifting frame 7, where the coupling means 9 are in position immediately opposite their engagement position at the edge 15 of the rubbish bin. By activating the propulsion of the dolly slightly and simultaneously activating the lifting frame 7 to lifting, an easy and elegant coupling together between the dolly 1 and the rubbish bin 2 is achieved. As it also appears from Fig. 2, it is not necessary that the arms 10 with support wheels 11 are moved in between two rubbish bins 2 since the lifting frame 7 extends so far forward that coupling may easily be effected, irrespectively of how close the rubbish bin 2 is standing to another rubbish bin or a wall.

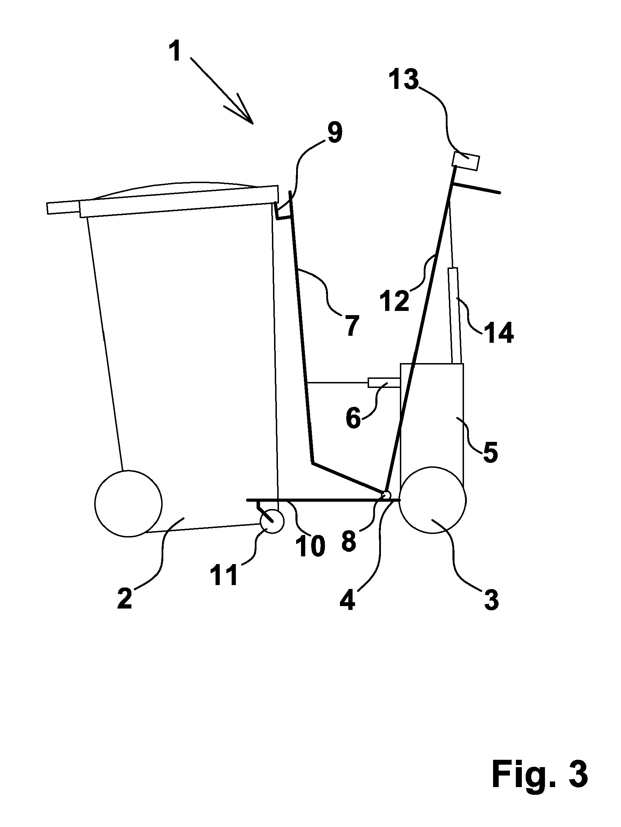

In Fig. 3 is seen the dolly 1 one step closer to a successful coupling where the lifting frame 7 undergoes lifting. Lifting occurs by activating a switch which on the shown dolly 1 is mounted on the control box 13.

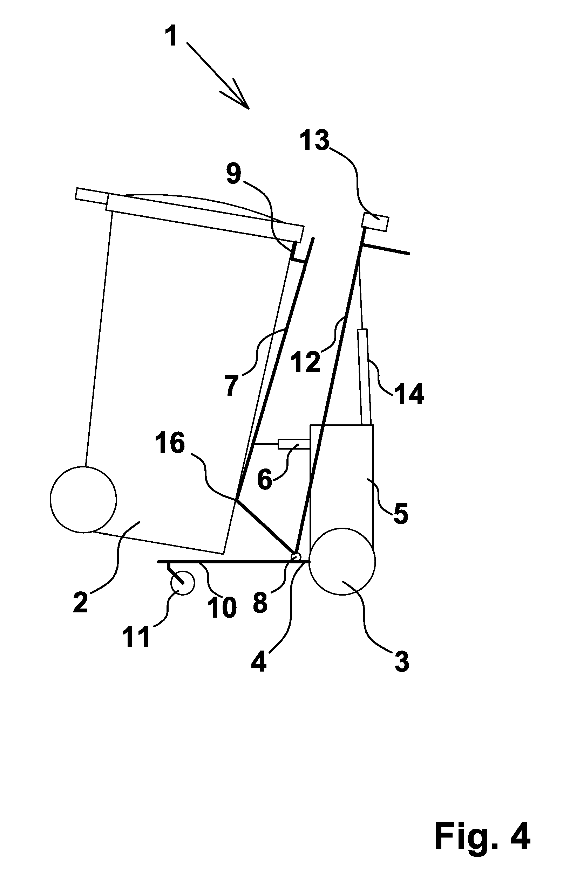

Finally, it appears from Fig. 4 that the rubbish bin is completely lifted off the base and is now in a position for transport to the desired place. As it is seen, the rubbish bin 2 is suspended by its edge 15 on the coupling means 9. The lifting frame 7 in the shown variant is provided with a knee 16 supporting against the side of the rubbish bin, whereby a more secure transport may take place.

## Claims

1. A dolly with chassis, motor for propulsion, steering handle and with actuation means, where the dolly is adapted for transporting units which via a coupling system are attached to the dolly, and where the dolly has at least one drive wheel, **characterised in that** the dolly includes a movable lifting frame, that the lifting frame is provided with coupling means for coupling between the dolly and a transporting unit, where the transporting unit is constituted by a rubbish bin.

2. Dolly according to claim 1, **characterised in that** the dolly is provided with a tilting lifting frame, the tilting frame being pivotably connected to the chassis about a horizontal axis on the dolly, thereby allowing a reciprocating movement of the lifting frame, preferably by a mechanical actuator.

3. Dolly according to claim 1 and 2, **characterised in that** the coupling means on the lifting frame are arranged on a movable upper part of the lifting frame, and that the movable upper part of the lifting frame is manually movable.

4. Dolly according to claim 1 and 2, **characterised in that** the coupling means on the lifting frame are arranged on a movable upper part of the lifting frame, and that the movable upper part of the lifting frame is automatically mechanically movable, e.g. by means of an actuator.

5. Dolly according to claims 1-4, **characterised in that** the dolly is provided with supporting wheels arranged on arms that project forwardly from the chassis with mutual spacing such that a rubbish bin can be placed between the arms.

6. Dolly according to claim 5, **characterised in that** the arms are adjustable in longitudinal direction.

7. Dolly according to claims 1-6, **characterised in that** the forwardly projecting arms are arranged for mounting a platform, where the platform is readily mounted and dismounted.

8. Dolly according to claims 1-7, **characterised in that** the dolly is provided with a pivoting steering handle which is movably connected to the chassis of the dolly, and where between steering handle and the dolly there is arranged a spring device, e.g. a gas spring.

9. Dolly according to claims 1-8, **characterised in that** the dolly is provided with a manual mechanical brake which is connected with the pivoting steering handle, e.g. in the form of one or two plates that are pressed against the wheels by tilting the steering handle.

10. Dolly according to claims 1-9, **characterised in that** the chassis of the dolly is adapted with means for adjusting the wheel gauge of the dolly.
